# EUROPEAN PATENT SPECIFICATION

(11) **EP 0 785 028 B1**
(45) Date of publication and mention of the grant of the patent: **27.06.2001**
(21) Application number: 96309326.5
(22) Date of filing: 18.12.1996
(51) Int. Cl.: B03B 9/04, C22B 7/04

(54) **Apparatus for solidifying and processing a molten material**
Vorrichtung zum Verfestigen und Behandeln geschmolzener Materialien
Appareil de solidification et de traitement de matériaux en fusion

(30) Priority: 20.01.1996 JP 2588596
(43) Date of publication of application: 23.07.1997
(73) Proprietor: DAIDO TOKUSHUKO KABUSHIKI KAISHA, Naka-ku Nagoya-shi Aichi-ken (JP)
(72) Inventor: Kinto, Kouichiro, Yokkaichi-shi, Mie-ken (JP)
(74) Representative: Whalley, Kevin

(56) References cited:
- EP-A- 0 429 298
- EP-A- 0 691 160
- JP-A- 6 063 690
- JP-A- 59 222 537
- JP-A- 62 172 107
- US-A- 2 971 703
- US-A- 4 436 138

## Description

This invention relates to a molten material solidifying and processing apparatus which is arranged to solidify and process molten material obtained by melting and processing wastes with a waste melting furnace.

A molten material is generally obtained by melting and processing the ashes of urban and municipal wastes, sewage sludge, industrial waste disposal and the like in a waste melting furnace. For example, the molten material is then cast into a water tank provided in a residue discharger disclosed in Japanese Publication JP-A-62-172107 and is water quenched and solidified. Water quenched and solidified material (hereinafter referred to as "quenched and solidified material") obtained in this manner is scraped and delivered by a conveyor. This material is separated into solidified fine particulates (hereinafter referred to as "water quenched metal, or quenched metal") of a magnetic metal component and solidified fine particulates (hereinafter referred to as "water quenched slag, or quenched slag") of an inorganic component, the former being reused in industrial equipment and the like whereas the latter is reutilized in civil engineering and building materials.

JP-A-62-172107 discloses the features of the preamble of claim 1.

Conventionally, the quenched slag is not only uneven in size and shape thereof but is also sharply pointed, so that the slag is required to be cast into a pulverizer such as a cage mill or the like where it is pulverized and processed. However, the slag is so hard that wear soon occurs if there is used a conventional pulverizer which is equipped with metal parts for pulverization, for example pins in the case of a cage mill. In order to cope with such wear, the parts for pulverization are made of ceramic instead of metal to this end. Disadvantages derived from use of ceramic-made parts for pulverization are that, for instance, coarse particle slag of more than 10mm particle size and of high hardness, as well as such coarse particle slag with metal of more than 10-15mm size therein, which is difficult to select by means of a magnetic separator after solidifying the coarse particle slag with metal therein when quenched and solidified in a tank, if introduced into the pulverizer would readily damage the ceramic-made parts for pulverization, to thereby require to occasionally exchange expensive parts with each other, thus increasing the cost of maintenance and making the use of such parts uneconomical.

When the metal contained in the coarse particle slag is of small size, the quenched slag is likely to mix into the quenched slag so that if the latter is used as building and civil engineering materials, there results not only formation of rust over the metal but also expansion and exfoliation thereof.

When the wastes to be processed contain more metal components, the effluent from the furnace is solidified in an icicle-like form and thus discharged as massive quenched metal or, for example, massive foreign matter in addition to the molten material such as pieces of broken subelectrodes and the like at the discharge port, so that bulky matter tends to clog the inlet of the processing apparatus such as the magnetic separator and the pulverizer or to enter the machine to cause breakage of the parts for pulverization.

Attention is also drawn to the disclosures of JP-A-06-063690, EP-A-0429298 and EP-A-0691160.

The present invention aims to overcome the above described disadvantages of the prior art and to provide a molten material solidifying and processing apparatus capable of remedying problems relating to breakage in a pulverizer or granulator for pulverizing quenched slag.

Another object of the invention is to provide a molten material solidifying and processing apparatus which is adapted to separate water quenched solids from molten material charged out of a waste melting furnace into quenched slag and quenched metal.

A further object of the invention is to provide a molten material solidifying and processing apparatus which is prevented from being blocked and broken by bulky matter exhausted from a water quenching granulator.

The present invention provides apparatus for solidifying and processing a molten material from a waste material melting furnace, comprising:
a water quenching granulator for a molten material discharged from a discharge port of a waste material melting furnace;
a magnetic separator for separating magnetic materials from water granulated solids discharged from a discharge port of said water quenching granulator;
a sieve for screening non-magnetic materials discharged from a discharge port therefor in said magnetic separator to separate into coarse particles and fine particles;
a pulverizer for further pulverizing said fine particles discharged from a discharge port therefor in said sieve, said pulverizer being provided therein with pulverizing parts made of ceramic;
a crusher for crushing said coarse particles discharged from a discharge port therefor in said sieve; and
a return passage provided to return crushed materials discharged from a discharge port therefor in said crusher to a path from said discharge port of said water quenching granulator to an inlet of said magnetic separator.

The apparatus of the invention preferably further comprises a sieve for bulky matter separation disposed on a path from said discharge port of said water quenching granulator to an inlet of said magnetic separator.

According to the present invention, various mills such as a cage mill, pin mill, vibrating mill and the like may be used as pulverizers. Preferably, a high-speed centrifugal pulverizer as described in the embodiments hereinafter is fabricated to have no abutment into which the objects to be pulverized are directly impacted, thereby saving the cost of maintenance and of new parts. It is noted that the parts for pulverization in the pulverizer herein referred to are slidably contacted or impacted with the objects to be pulverized.

According to the present invention, a crusher is used to crush the coarse particles slag with metal therein and separate the former into quenched metal and quenched slag. To this end, various crushers such as a jaw crusher, roll crusher and the like may be used.

The invention will be further described, by way of example only, with reference to the accompanying drawings, in which:
Fig. 1 is an overall schematic representation showing a molten material solidifying and processing apparatus according to a first embodiment of the invention;
Fig. 2 is a fragmentary vertical section of the principal part of a pulverizer shown in Fig. 1; and
Fig. 3 is an overall schematic representation showing a molten material solidifying and processing apparatus according to a second embodiment of the invention.

In the embodiment of the present invention shown in Fig, 1, a water quenching granulator 3 is disposed downwardly of a discharge port 2 of an overflow type, which is formed in a waste melting furnace 1 of an arc type. The water quenching granulator 3 includes a water tank 4, a water supply system 6 adapted to feed return water from the tank to a water quenching nozzle 5 after the water is cooled, and a scraper conveyor 7 arranged in the tank 4 and provided with sweeper or scraper boards to run along the bottom of the tank.

The quenched solids which have been scraped with the scraper conveyor 7 are exhausted from a discharge port 8 for quenched solids. Downwardly of the port 8, there is arranged a bucket elevator 10 of an inner bucket type on which a bucket 13 (partially shown) inside a belt 12 is mounted with an inlet 11 oriented with the discharge port 8. In this connection, the bucket elevator 10 is shown in a typical representation with a tower being omitted from the drawing.

A magnetic separator 20 of a rotary drum type is disposed downwardly of a discharge port 14 of the bucket elevator 10 with the top of a vibrating feeder 21 disposed below the discharge port 14. The magnetic separator 20 comprises the vibrating feeder 21 within a casing 22, a drum 23 rotatably journalled downstream of the feeder 21, a cylindrical permanent magnet 24 mounted inside the drum 23, and a scraper 25. The scraper 25 is supported at its one end to be in slidable contact with the periphery of the drum 23. The casing 22 is fabricated at its lower end to fork into two segments, the first being provided downwardly thereof with a magnetic material outlet 26 which is located above a vessel 27 to contain magnetically selected water quenched metal M, whereas the second segment is formed with a non-magnetic material outlet 28 which is located above a sieve 30.

The sieve 30 is adapted to separate particulates 31 which consist of quenched slag S, coarse particle quenched slag S with water quenched metal M contained therein, and pieces of broken electrodes and the like into coarse particles 32 and fine particles 33. In this embodiment, a vibrating sieving machine with a screen 34 having an opening size of 8mm is employed. The sieve 30 includes a discharge port 35 for the coarse particles 32 on the sieve to receive the same therein. A discharge port 37 for the fine particle parts is opened upwardly of a conveyor 38 at one end thereof.

The other end of the conveyor 38 is disposed upwardly of an opening of a hopper 40 adapted to adjust the amount of the fine particle parts to be fed. A charging rate controlling feeder 41 for supplying the fine particle parts in a predetermined quantity is mounted below the hopper 40. A pulverizer 45 is opened at an inlet 46 underneath the charging rate controlling feeder 41 at the forward end thereof.

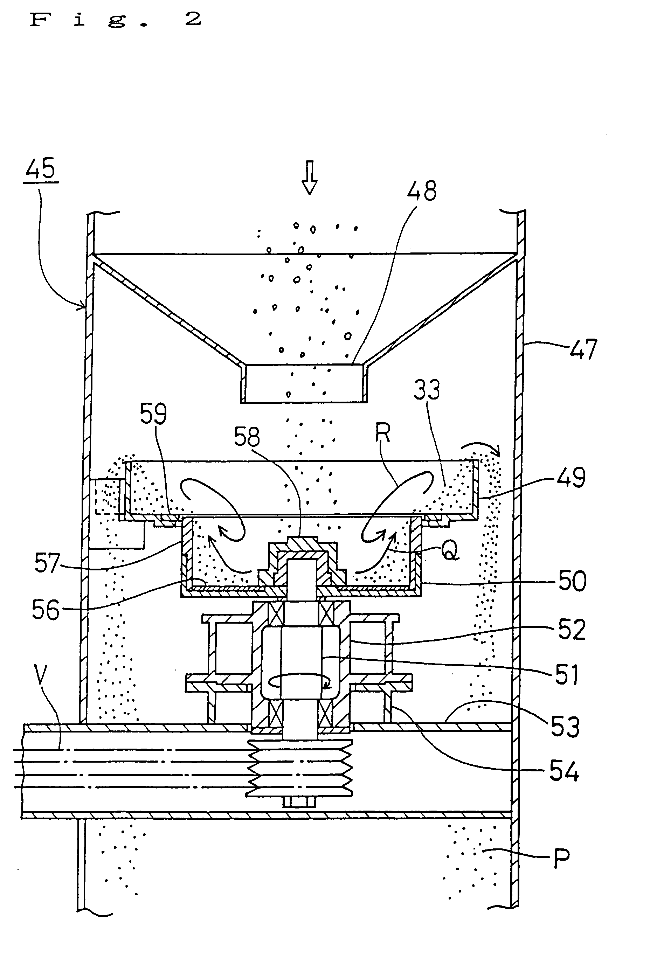

The pulverizer 45 is a high speed centrifugal pulverizer which is used in a casting factory to regenerate old or used sand. As shown in Fig. 2, the pulverizer 45 is composed of a cylindrical casing 47 having a charging opening 48 formed thereabove, an annular shelf 49 of L-shaped cross section disposed below the charging opening 48, and a rotary dish 50 having its upper flange disposed adjacent a central opening in the shelf 49. The rotary dish 50 is mounted on a vertically extending rotary shaft 51 which is driven at a high speed by a motor (not shown) via a belt V. A cylindrical member 52 adapted to support the rotary shaft 51 on a bearing is secured by a bracket 54 to a support 53 serving as a belt cover.

The pulverizer 45 is further arranged so that the fine particles 33 in the quenched slag S are charged into the rotary dish 50 and rotated about the vertical axis while being subjected to centrifugal force and then flow over the rim of the rotary dish 50 and into the shelf 49. The fine particles 33 in the annular shelf 49 flow in the direction of the arrow Q from the top of the shelf and backwardly fall on the rotary dish 50 so that a circling stream is formed in the direction of the arrow R to provde friction between the fine particle parts, thereby reducing the latter to particulates in an even form. The resultant particulates obtained according to the amount of the fine particles introduced from the charging rate controlling feeder 41 flow out of the rim of the shelf 49 and then flow out of a discharge port 55 as slag particles P.

In the pulverizing process, the pulverizing parts such as a bottom liner 56 of the rotary dish 50, a drum edge 57 served as a side liner, a cap 58 over the shaft 51, and a ring edge 59 of the annular shelf 49, which are brought into contact with the slag fine particles 33 to be powdered or pulverized, are made of hard (but not resistible to shock) ceramic instead of metal which wears in a short time.

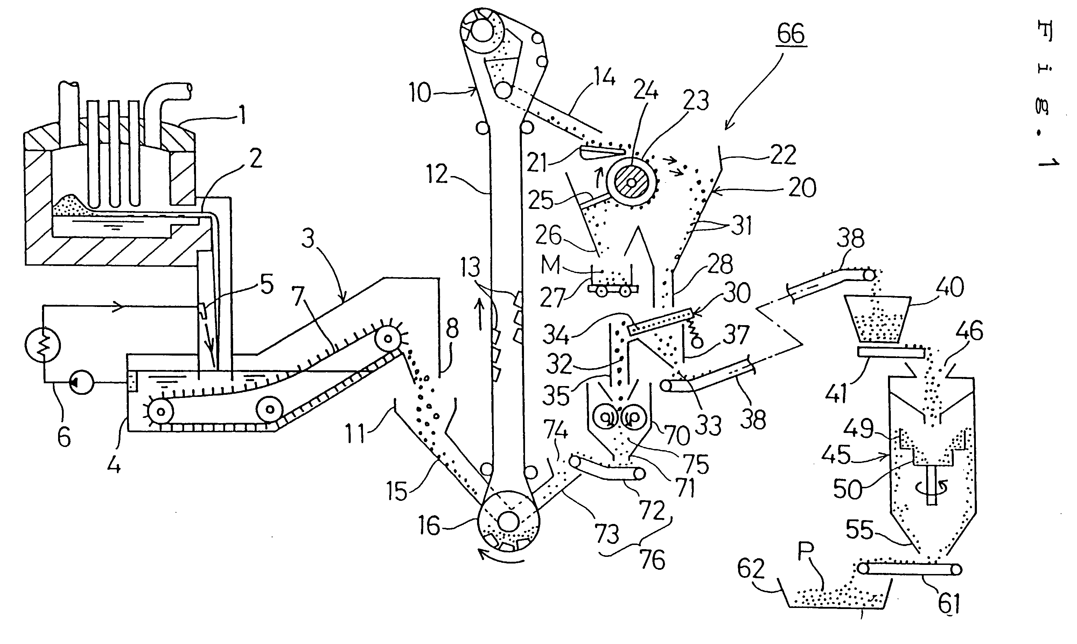

As shown in Fig. 1, the discharge port 55 of the pulverizer 45 opens above a conveyor 61 which is extended to the top of a pit 62 adapted for storing the slag particles P.

A molten material solidifying and processing equipment 66 as above arranged is designed so that the molten material obtained by melting and processing the wastes in the waste melting furnace overflows from the discharge port 2 and is introduced into the water tank 4. The molten material is further rapidly cooled and water quenched and solidified after being subjected to injection water from the water quenching nozzle 5. The resultant solids are then conveyed by the scraper conveyor 7 in the tank 4 and fall from the discharge port 8 into the inlet 11 of the bucket elevator 10.

The quenched solids which have entered from a charging chute 15 into a loading portion 16 of the bucket elevator 10 and then upwardly conveyed by the bucket 13 are introduced from the discharge port 14 to the magnetic separator 20. The magnetic separator 20 functions to separate the solids, which are supplied by the vibrating feeder 21 to the periphery of the drum 23, into non-magnetic quenched slag S and particulates 31 other than magnetic quenched metal M in such a manner that the slag S is discharged by centrifugal force from the periphery of the drum 23 rotatable at a relatively high speed whereas the metal M is solely attracted by magnetic force of the permanent magnet 24 to the periphery of the drum 23 and scraped off by the scraper 25. The separated quenched metal M is collected from the outlet 26 into the vessel 27. The particulates 31 are discharged out of the discharge port 28 and supplied to the screen 34 of the sieve 30.

The sieve 30 is actuated to screen the particulates 31 thus separating the latter into the slag particles S each of which is of diameter larger than the opening size of the screen 34, coarse quenched slag with the quenched metal M therein, and electrode broken pieces or the like as coarse particles. The coarse particles 32 are discharged from the discharge port 35. There are provided under the sieve small diametric quenched slag S, and small diametric quenched slag S with a smaller size quenched metal M therein, which are discharged as fine particles 33 from the discharge port 37 therefor onto the conveyor 38. The fine particles 33 are carried by the conveyor 38. The fine particles 33 are carried by the conveyor 38 and pass through the hopper 40 and the charging rate controlling feeder 41 and are then charged into the pulverizer 45. The charged particulates are pulverized and grain size adjusted by the pulverizer 45 to slag grains P which are accumulated in the slag pit 62 in an even form.

In this manner, the pulverizer 45 is adapted to receive therein only the fine particles 33 of a grain diameter less than a predetermined diameter to positively prevent water quenched slag S of large size and coarse particle slag with quenched metal M therein, and pieces of massive broken electrodes and the like from entering into the pulverizer 45, so that the inlet or the inside of the machine is not blocked.

In the embodiment of Fig. 1 there is provided a crusher 70 such as a roll crusher disposed below the discharge port 35 of the sieve 30, and the forward end of a return conveyor 72 disposed below a discharge port 71 of the crusher 70 is positioned above an inlet 74 of a return chute 73 in communication with the inside of the loading portion 16 of the bucket elevator 10. The molten material solidifying and processing apparatus 66 is designed to prevent the coarse particles 32 in the particulates 31 from entering into the pulverizer 45. The coarse particles 32 discharged from the discharge port 35 are introduced in the crusher 70 to crush and reduce the water quenched slag S of large size and the pieces of broken electrodes in the coarse particles 32 to those of small diameter. Concurrently, the coarse particle slag with metal therein is crushed to separate the metal from the slag. A crushed metal 75 such as a small diametric mixture passes through a return passage 76 which consists of the return conveyor 72 and the return chute 73 and is then returned to the side of the loading portion 16 of the bucket elevator 10. The crushed material 75 is mixed with the quenched solids from the discharge port 8 of the water quenching granulator 3 and is upwardly conveyed and charged into the magnetic separator 20 again. The endomorphic or involved metal which are separated by means of the aforementioned crushing are magnetically selected. On the other hand, the quenched slag S reduced in diameter by the aforementioned crushing is separated from the endomorphic or involved metal and is then reduced in diameter. The slag S mostly passes through the sieve 30 and to the pulverizer 45, resulting in grain size adjustment after crushing.

As aforementioned, in the molten material solidifying and processing apparatus 66, upon the coarse particles 32 being crushed by the crusher 70 and magnetically selected by the magnetic separator 20, the coarse particle slag with the metal therein is positively separated into quenched slag and quenched metal so that the recovery percentage of the quenched slag S and the quenched metal M is improved.

Although this embodiment has been illustrated and described as embodied in that the crushed material 75 discharged from the discharge port 71 is returned to the loading portion 16 of the bucket elevator 10, the crushed material may be returned by another return passage arranged at the inlet 11 of the bucket elevator 10 or above the feeder 21 of the magnetic separator 20, leading to a position other than the path for the quenched solids from the discharge port 8 of the granulator 3 to the inlet of the magnetic separator 20.

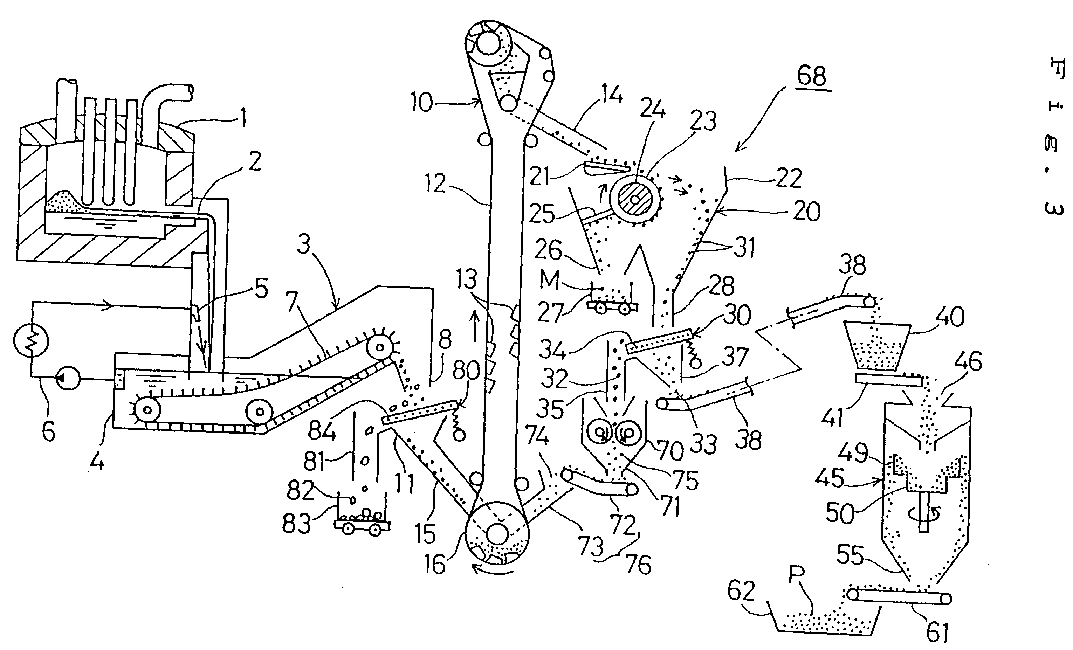

Referring now to Fig. 3, like reference numerals and characters designate like or corresponding parts shown in Fig. 1 so that a detailed description of similar parts will not be repeated.

A molten material solidifying and processing apparatus 68 in this embodiment is different from the molten material solidifying and processing apparatus 66 shown in Fig. 1 in that a sieve 80 for bulky matter selection is provided between the quenched solid discharge port 8 of the water quenching granulator 3 and the inlet 11 of the bucket elevator 10, and that a vessel 83 is positioned below a discharge port 81 on the right side of the sieve to contain therein bulky matter 82. A vibrating feeding machine with a screen 84 of 30mm opening size is used as the sieve 80 in this embodiment. The screen 84 is located just above the inlet 11 to the bucket elevator 10 followed by the charging chute 15 which functions as the discharge port on the back side of the sieve.

The molten material solidifying and processing apparatus 68 as above arranged is adapted, in the same manner as in the embodiment shown in Fig. 1, to prevent the coarse particles 32 in the particulates 31 from entering the pulverizer 45 at the same time as bulky matter 82 such as the massive quickened metal and the pieces of broken electrode discharged out of the quenched solid discharge port 8 of the water quenching granulator 3 are separated by the sieve 80 and exhausted from the discharge port 81 on the right side of the sieve into the vessel 83, so that the bulky matter 82 by way of the bucket elevator 10 is prevented from entering the magnetic separator 20 and the pulverizer 45, thereby causing neither blockage nor breakage in the successive processing equipment such as the bucket elevator 10.

In this alternative embodiment, the sieve 80 is positioned just under the discharge port 8 to separate the bulky matter 82 at an early stage to prevent the latter from entering the conveyor means such as the bucket elevator 10, thereby causing neither blockage nor breakage therein. Alternatively, the sieve 80 may be located above the vibrating feeder 21 or intermediate of the conveyor means (for instance, half way between the two conveyors arranged in series), or else may be arranged in the path where the quenched solids are conveyed from the discharge port 8 to the inlet of the magnetic separator 20.

On the other hand, the bulky matter 82 is separated by the sieve 80 and thus not delivered to the crusher 70 across the passage above the magnetic separator 20 and the sieve 30. For this reason, loads upon the crusher 70 are decreased to not only make possible the use of a crusher of small size, but also to further reduce the grain size of crushed matter, thereby increasing an efficiency percentage of the quenched slag S to be reclaimed as fine particles 33.

It is to be understood that this invention is not to be limited to the specific embodiments shown. For example, a conveyor and a chute of any other type for conveying the particulates from the water quenching granulator 3 and the sieve 30 to the pulverizer 45 may be used. Further, the particulate exhaust port of the machine or the mechanism upstream of the apparatus may be disposed to directly face or to be connected to the particulate inlet of the apparatus downstream of the apparatus. Furthermore, the furnace 1, granulator 3, magnetic separator 20, sieves 30 and 80, pulverizer 45, and the crusher 70 may be of any other type than those hereinbefore referred to, while the screen may be of any other opening size than the size as above referred to.

According to the present invention
- the crusher is adapted to introduce only the fine particle parts screened by the sieve to prevent the ceramic pulverizing parts inside of the pulverizer from being broken.
- the coarse particle slag with metal is crushed by the crusher and magnetically selected through the return route after separating the quenched solids into the slag and the metal by the magnetic separator so that the quenched solids may be efficiently separated into the two to increase the efficiency percentage thereof.
- bulky matter such as massive quenched metal and pieces of broken electrode are screened by the sieve to prevent the processing equipment from being blocked and broken.

## Claims

1. Apparatus for solidifying and processing a molten material from a waste material melting furnace, comprising:
a water quenching granulator (3) for a molten material discharged from a discharge port (2) of a waste material melting furnace (1);
a magnetic separator (20) for separating magnetic materials from water granulated solids discharged from a discharge port (8) of said water quenching granulator (3);
characterised in that it comprises a sieve (30) for screening non-magnetic materials discharged from a discharge port (28) therefor in said magnetic separator (20) to separate into coarse particles (32) and fine particles (33);
a pulverizer (45) for further pulverizing said fine particles (33) discharged from a discharge port (37) therefor in said sieve (30), said pulverizer being provided therein with pulverizing parts made of ceramic;
a crusher (70) for crushing said coarse particles (32) discharged from a discharge port (35) therefor in said sieve (30); and
a return passage (76) provided to return crushed materials discharged from a discharge port (71) therefor in said crusher (70) to a path from said discharge port (8) of said water quenching granulator (3) to an inlet of said magnetic separator (20).

2. Apparatus as claimed in claim 1, characterized by further comprising a sieve (80) for bulky matter separation disposed on a path from said discharge port (8) of said water quenching granulator (3) to an inlet of said magnetic separator (20).

## Patentansprüche

1. Vorrichtung zum Verfestigen und Behandeln eines geschmolzenen Materials aus einem Abfallschmelzofen, die aufweist:
einen Granulator (3) mit Wasserabschreckung für ein geschmolzenes Material, das aus einer Austrittsöffnung (2) eines Abfallschmelzofens (1) austritt;
einen Magnetscheider (20) für das Abscheiden magnetischer Materialien aus wassergranulierten Festkörpern, die aus einer Austrittsöffnung (8) des Granulators (3) mit Wasserabschreckung austreten;
dadurch gekennzeichnet, daß sie aufweist:
ein Sieb (30) für das Aussieben nichtmagnetischer Materialien, die aus einer Austrittsöffnung (28) dafür im Magnetscheider (20) austreten, um in grobe Teilchen (32) und feine Teilchen (33) zu trennen;
eine Pulverisiereinrichtung (45) für das weitere Pulverisieren der feinen Teilchen (33), die aus einer Austrittsöffnung (37) dafür im Sieb (30) austreten, wobei die Pulverisiereinrichtung darin mit Teilen für die Pulverisierung bereitgestellt wird, die aus keramischem Material bestehen;
einen Brecher (70) für das Zerkleinern der groben Teilchen (32), die aus einer Austrittsöffnung (35) dafür im Sieb (30) austreten; und
einen Rückführdurchgang (76), der bereitgestellt wird, um die zerkleinerten Materialien, die aus einer Austrittsöffnung (71) dafür im Brecher (70) austreten, auf einen Weg von der Austrittsöffnung (8) des Granulators (3) mit Wasserabschreckung zu einem Eintritt des Magnetscheiders (20) zurückzuführen.

2. Vorrichtung nach Anspruch 1, dadurch gekennzeichnet, daß sie außerdem ein Sieb (80) für die Trennung von voluminösem Material aufweist, das in einem Weg von der Austrittsöffnung (8) des Granulators (3) mit Wasserabschreckung zu einem Eintritt des Magnetscheiders (20) angeordnet ist.

## Revendications

1. Appareil pour la solidification et le traitement d'un matériau en fusion provenant d'un four de fusion de déchets, comprenant:
un granulateur par trempe à l'eau (3) destiné à un matériau en fusion déchargé à partir d'un orifice de décharge (2) d'un four de fusion de déchets (1);
un séparateur magnétique (20) pour séparer des matériaux magnétiques issus de solides granulés par l'eau déchargés à partir d'un orifice de décharge (8) dudit granulateur par trempe à l'eau (3);
caractérisé en ce qu'il comprend un tamis (30) pour passer au crible les matériaux non magnétiques déchargés à partir d'un orifice de décharge (28) pour ceux-ci dans ledit séparateur magnétique (20) afin d'effectuer une séparation entre des particules grossières (32) et des particules fines (33);
un pulvérisateur (45) pour pulvériser davantage lesdites particules fines (33) déchargées à partir d'un orifice de décharge (37) pour celles-ci dans ledit tamis (30), ledit pulvérisateur étant muni à l'intérieur de pièces de pulvérisation faites de céramique;
un concasseur (70) pour concasser lesdites particules grossières (32) déchargées à partir d'un orifice de décharge (35) pour celles-ci dans ledit tamis (30); et
un passage en retour (76) prévu pour faire retourner les matériaux concassés déchargés à partir d'un orifice de décharge (71) pour ceux-ci dans ledit concasseur (70) vers un passage allant dudit orifice de décharge (8) dudit granulateur par trempe à l'eau (3) à une entrée dudit séparateur magnétique (20).

2. Appareil suivant la revendication 1, caractérisé par le fait de comprendre en outre un tamis (80) pour la séparation de matière volumineuse, placé sur un passage allant dudit orifice de décharge (8) dudit granulateur par trempe à l'eau (3) à une entrée dudit séparateur magnétique (20).
